# EUROPÄISCHE PATENTANMELDUNG

(11) **EP 4 044 335 A1**
(43) Veröffentlichungstag der Anmeldung: **17.08.2022**
(21) Anmeldenummer: 22154456.2
(22) Anmeldetag: 01.02.2022
(51) Int. Cl.: H01M 50/186, H01M 50/184, H01M 50/105, H01M 50/195, H01M 10/613, H01M 10/647, H01M 10/653, H01M 10/04

(54) **BATTERIEZELLE UND VERFAHREN ZUR HERSTELLUNG EINER BATTERIEZELLE**

(30) Priorität: 12.02.2021 DE 102021103376
(71) Anmelder: VOLKSWAGEN AG, 38440 Wolfsburg (DE)
(72) Erfinder: Ebbighausen, Marius, 31718 Pollhagen (DE); Theuerkauf, Christian, 38114 Braunschweig (DE); Jamadar, Kartik, 38442 Wolfsburg (DE); Westerhoff, Uwe, 38165 Lehre (DE); Puschmann, Christian, 38159 Vechelde (DE)
(74) Vertreter: karo IP

(57) **Zusammenfassung**

Batteriezelle (1), zumindest aufweisend ein gasdicht ausgeführtes Zellengehäuse (2) und darin angeordnet mindestens einen Stapel (3) aufeinander angeordneter Elektrodenfolien (4); wobei das Zellengehäuse (2) durch ein Folienmaterial (5) gebildet ist, wobei das Zellengehäuse (2) einen den Stapel (3) umfassenden Gehäuseteil (6) und an zumindest einer Seite (7) der Batteriezelle (1) einen, durch das Verbinden eines ersten Endbereichs (8) des Folienmaterials (5) mit einem zweiten Endbereich (9) des Folienmaterials (5) gebildeten, von dem Gehäuseteil (6) in einer radialen Richtung (10) nach außen abstehenden Randbereich (11) aufweist; wobei der Randbereich (11) hin zum Gehäuseteil (6) umgebogen angeordnet ist und zwischen Gehäuseteil (6) und Randbereich (11) einen sich entlang einer Umfangsrichtung (12) erstreckenden Kanal (13) ausbildet; wobei der Kanal (13) in zumindest einem sich quer zur Umfangsrichtung (12) erstreckenden Querschnitt (14) des Kanals (13) zu mindestens zu 50 % mit einem Zusatzmaterial (15) gefüllt ist.

Verfahren zur Herstellung einer Batteriezelle (1).

## Beschreibung

Die Erfindung betrifft eine Batteriezelle und ein Verfahren zur Herstellung einer Batteriezelle.

Die Batteriezelle umfasst ein gasdicht ausgeführtes Zellengehäuse und darin angeordnet mindestens einen Stapel aufeinander angeordneter Elektrodenfolien. Das Zellengehäuse ist durch ein Folienmaterial gebildet. Das Zellengehäuse weist ein den Stapel umfassendes Gehäuseteil und an zumindest einer Seite der Batteriezelle einen, durch das Verbinden eines ersten Endbereichs des Folienmaterials mit einem zweiten Endbereich des Folienmaterials gebildeten, von dem Gehäuseteil in einer radialen Richtung nach außen abstehenden Randbereich auf.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges auf, wobei die elektrische Maschine durch die in der Batteriezelle gespeicherte elektrische Energie antreibbar ist. In einer Batteriezelle sind Elektrodenfolien, also Anoden und Kathoden aufeinander gestapelt angeordnet, wobei unterschiedliche Elektrodenfolien durch Separatorfolien oder ein Separatormaterial voneinander getrennt angeordnet sind. Die Elektrodenfolien sind in einem Elektrolyt angeordnet. Es sind z. B. Batteriezellen mit flüssigen oder festen Elektrolyten (Feststoffbatterie) bekannt.

Ein Batteriemodul umfasst insbesondere eine Mehrzahl von Batteriezellen, die miteinander elektrisch in Reihe oder parallel geschaltet und in einem Modulgehäuse angeordnet sind. Auch einzelne Batteriemodule können miteinander elektrisch in Reihe oder parallel geschaltet werden. Eine Batterie umfasst ein Batteriemodul oder eine Mehrzahl von Batteriemodulen.

Batteriezellen können als sogenannte Pouchzellen (oder Taschenzellen) ausgeführt sein. Die Pouchzellen umfassen ein Verbundmaterial als Folienmaterial für das Gehäuse. Das Verbundmaterial ist ein Kompositmaterial, insbesondere umfassend Aluminium und Kunststoff. Das Zellengehäuse kann durch mehrere Folienmaterialien gebildet sein, die aufeinander angeordnet werden und einen den Stapel umschließenden Gehäuseteil und einen von dem Gehäuseteil in der radialen Richtung nach außen abstehenden Randbereich ausbilden. Das Zellengehäuse kann auch durch ein einziges Folienmaterial ausgebildet sein, wobei das Zellengehäuse durch ein Falten des Folienmaterials gebildet wird. In diesem Fall ist zumindest an einer Seite des Zellengehäuses kein Randbereich ausgebildet. In den Randbereichen werden die aufeinanderliegenden Folienmaterialien miteinander gasdicht verbunden, insbesondere über eine Siegelnaht.

Es kann die Anforderung bestehen, eine Batteriezelle zur Kühlung an ein Kühlelement bzw. eine Kühloberfläche anzubinden. Die Kühlung kann nicht über die Seitenflächen des Zellengehäuses erfolgen, an denen die Ableiter aus dem Zellengehäuse herausgeführt werden. Regelmäßig werden bei Pouchzellen die langen, schmalen Seitenflächen an Kühloberflächen angebunden. Die Anbindung erfolgt üblicherweise nur über die Seitenfläche, an der das Folienmaterial gefaltet wurde. An der anderen Seitenfläche liegt eine Siegelnaht und ein entsprechend von dem Gehäuseteil abstehender Randbereich vor, der regelmäßig durch ein Klebeband an dem Gehäuseteil durch Umbiegen oder Falten fixiert wird. Die Wärmeleitung hin zur Kühloberfläche ist an dieser Seitenfläche infolge des umgefalteten bzw. umgebogenen Randbereichs beeinträchtigt. Durch die Faltung können zudem hohe Spannungen in die Siegelnaht eingebracht werden, so dass die Gasdichtigkeit der Siegelnaht ggf. nicht gewährleistet werden kann.

Die Montage des Klebebands muss nach dem Falten erfolgen und ist damit aufwändig in der Durchführung. Weiterhin können sich durch das Klebeband unterschiedliche Verpressungszustände in der Batteriezelle ergeben.

Aus der DE 10 2015 110 667 A1 ist eine Zellenanordnung mit einer Mehrzahl von Taschenzellen bekannt, bei denen das Zellengehäuse durch Faltung eines Folienmaterials hergestellt ist. Damit werden an gegenüberliegenden Seitenflächen des Zellengehäuses die jeweiligen Randbereiche einmal durch eine Verschweißung und einmal durch eine Faltung gebildet. Beide Seitenflächen werden an Kühlelementen zur Ableitung von Wärme aus der Batteriezelle angeordnet. Da die Seitenflächen mit Verschweißung eine schlechtere Kontaktierung zu den Kühlelementen aufweisen, werden die Taschenzellen abwechselnd mit unterschiedlicher Orientierung angeordnet. Damit kann die Kühlung der Taschenzellen effektiver erfolgen.

Aus der DE 10 2013 016 618 A1 ist eine Batterieeinzelzelle bekannt, wobei die Folien umlaufend um den Stapel von Elektroden zu einer Siegelnaht verschweißt sind. Ein derartiger Randbereich des Zellengehäuses ist eingerollt oder zweifach eingeschlagen ausgebildet. Die so eingerollte oder eingeschlagene Siegelnaht kann über Klebematerialien an dem den Stapel umschlingenden Teil der Folien angebunden werden.

Aus der DE 10 2014 014 529 A1 ist eine Einzelzelle bekannt, bei der die aus dem Gehäuse herausragenden Ableiter umgebogen und über einen Klebstoff an der Einzelzelle stoffschlüssig fixiert werden. Die stoffschlüssige Fixierung erfolgt mittels Siegelung oder durch ein Klebeband.

Aufgabe der vorliegenden Erfindung ist es, die mit Bezug auf den Stand der Technik angeführten Probleme zumindest teilweise zu lösen. Insbesondere soll eine Batteriezelle vorgeschlagen werden, die eine alternative Fixierung eines Randbereichs an einem Gehäuseteil einer Batteriezelle ermöglicht und die insbesondere eine gute Wärmeableitung an eine Kühloberfläche auch über einen Randbereich mit Siegelnaht ermöglicht. Es soll insbesondere auch ein Verfahren zur Herstellung einer solchen Batteriezelle vorgeschlagen werden.

Zur Lösung dieser Aufgaben trägt eine Batteriezelle mit den Merkmalen gemäß Patentanspruch 1 und ein Verfahren zur Herstellung einer Batteriezelle gemäß Patentanspruch 5 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Batteriezelle vorgeschlagen, zumindest aufweisend ein gasdicht ausgeführtes Zellengehäuse und darin angeordnet mindestens einen Stapel aufeinander angeordneter Elektrodenfolien. Das Zellengehäuse ist durch ein Folienmaterial gebildet. Das Zellengehäuse weist ein den Stapel umfassendes Gehäuseteil und an zumindest einer Seite der Batteriezelle bzw. des Zellengehäuses einen, durch das Verbinden eines ersten Endbereichs des Folienmaterials mit einem zweiten Endbereich des Folienmaterials gebildeten, von dem Gehäuseteil in einer radialen Richtung nach außen abstehenden Randbereich auf. Der Randbereich ist hin zum Gehäuseteil umgebogen angeordnet und bildet zwischen Gehäuseteil und Randbereich einen sich entlang einer Umfangsrichtung erstreckenden Kanal aus. Der Kanal ist in zumindest einem sich quer zur Umfangsrichtung erstreckenden Querschnitt des Kanals zu mindestens 50 %, insbesondere zu mindestens 75 %, bevorzugt zu mindestens 90 %, besonders bevorzugt vollständig, mit einem Zusatzmaterial gefüllt.

In einer Batteriezelle sind insbesondere Elektrodenfolien, also Anoden und Kathoden, aufeinander gestapelt angeordnet, wobei unterschiedliche Elektrodenfolien durch Separatorfolien oder ein Separatormaterial voneinander getrennt angeordnet sind. Die Elektrodenfolien sind in einem Elektrolyt angeordnet. Es sind z. B. Batteriezellen mit flüssigen oder festen Elektrolyten (Feststoffbatterie) bekannt. Die Batteriezelle ist insbesondere eine Lithium-Ionen-Batteriezelle. Die elektrische Kontaktierung der Batteriezelle erfolgt insbesondere über Ableiter, die innerhalb der Batteriezelle die Elektrodenfolien elektrisch leitend kontaktieren und sich über das Zellengehäuse nach außen erstrecken.

Die Batteriezelle ist insbesondere eine Pouchzelle und unterscheidet sich von bekannten Pouchzellen insbesondere durch die Anordnung des Randbereichs und die Anordnung bzw. das Verfüllen mit Zusatzmaterial.

Der Randbereich ist insbesondere durch die aufeinanderliegenden Bereiche der Folienmaterialien (z. B. Endbereiche eines einzigen Folienmaterials oder Endbereiche von unterschiedlichen Folienmaterialien) in bekannter Weise gebildet. Der Randbereich bildet eine gasdichte Verbindung der Folienmaterialien aus. Insbesondere umfasst der Randbereich eine bekannte Siegelnaht.

Der Randbereich ist hin zum Gehäuseteil umgebogen angeordnet und bildet so einen, sich entlang einer Umfangsrichtung um das Gehäuseteil erstreckenden, Kanal zwischen Gehäuseteil und Randbereich aus. Der Randbereich kann dabei soweit umgebogen angeordnet sein, dass er den Gehäuseteil kontaktiert und so in dem Querschnitt einen geschlossenen Kanal ausbildet. Kontaktiert der Randbereich das Gehäuseteil nicht, ist der Kanal in dem Querschnitt also nach außen offen, wird die Querschnittsfläche anders berechnet. In diesem Fall wird der Kanal durch eine gedachte kürzeste Verbindung zwischen dem Randbereich und dem Gehäuseteil begrenzt.

Der umgebogene Randbereich ist insbesondere an mindestens einer Seite der Batteriezelle bzw. des Zellengehäuses ausgebildet. Der Randbereich erstreckt sich insbesondere nicht über diese Seite hinaus zu einer anderen Seite des Zellengehäuses (wie z. B. das Klebeband bei bekannten Batteriezellen). Der Randbereich ist also nur an der mindestens einen Seite des Zellengehäuses angeordnet.

Dieser so definierte Kanal weist in dem Querschnitt eine Querschnittsfläche auf, die im Mittel zu den genannten Anteilen durch das Zusatzmaterial gefüllt ist.

Entlang der Erstreckung des Kanals ist insbesondere keine Durchführung eines Ableiters vorgesehen.

Mit dem in den Kanal eingebrachtem Zusatzmaterial kann ein spannungsarmes Falzen bzw. Umbiegen einer im Randbereich angeordneten Siegelnaht gewährleistet werden. Das in dem Kanal angeordnete Zusatzmaterial kann den Randbereich an dem Gehäuseteil abstützen, so dass zu geringe Radien entlang des Verlaufs des Randbereichs entlang der radialen Richtung vermieden werden. Insbesondere kann so ein Falzen bzw. Knicken (also ohne Radius bzw. mit einem sehr kleinen Biegeradius, z. B. von weniger als 0,5 Millimeter, gemessen an der hin zum Biegeradius orientierten Oberfläche des Randbereichs) des Randbereichs verhindert werden.

Weiter kann eine gleichmäßige Verpressung des Stapels von Elektrodenfolien in der Batteriezelle gewährleistet werden.

Das Zusatzmaterial ermöglicht, insbesondere wenn es hinsichtlich der Wärmeleitung ausgewählt ist, eine Verbesserung der Wärmeleitung von der Batteriezelle über das Gehäuseteil hin zu einer den Randbereich kontaktierenden Kühloberfläche. Damit kann eine Anbindung eines Randbereichs, umfassend eine Verbindung von Folienmaterial, ggf. über eine Siegelnaht, einer Batteriezelle an eine Kühloberfläche realisiert werden, die eine, zu Seitenflächen ohne derartigen Randbereich, gleichwertige Wärmeableitung aus der Batteriezelle ermöglicht.

Das Zusatzmaterial härtet insbesondere selbstständig aus. Es kann eine thermische Aushärtung (bei Raumtemperatur) erfolgen. Die Aushärtung des Zusatzmaterial kann durch eine Wärmebehandlung beschleunigt werden.

Das Zusatzmaterial ist in einem betriebsbereiten Zustand der Batteriezelle insbesondere ortsfest, d. h. es wird sich nicht selbstständig aus der ursprünglichen Anordnung in dem Kanal lösen. Dieser Zustand wird als formstabil bezeichnet. Das Zusatzmaterial kann in diesem Zustand elastisch oder auch nur plastisch verformbar sein.

Das Zusatzmaterial ist insbesondere ein Klebstoff, durch den der Randbereich mit dem Gehäuseteil verbunden ist. Der Randbereich wird durch den Klebstoff in seiner Lage fixiert, d. h. die Verbindung zwischen dem Zusatzmaterial und dem Randbereich bzw. zwischen dem Zusatzmaterial und dem Gehäuseteil ist nur durch Zerstörung des Zusatzmaterials auflösbar.

Das Zusatzmaterial ist insbesondere ein wärmeleitendes Material. Die Wärmeleitfähigkeit des Zusatzmaterials liegt insbesondere in der Größenordnung der Wärmeleitfähigkeit des Folienmaterials, also beträgt mindestens 10 %, insbesondere mindestens 50 %, der Wärmeleitfähigkeit des Folienmaterials, das für das Zellengehäuse verwendet wird. Insbesondere weist das Zusatzmaterial eine höhere Wärmeleitfähigkeit als das Folienmaterial auf.

Insbesondere umfasst das Zusatzmaterial zumindest ein Polymermaterial, z. B. ein Epoxid, Acryl, Silikon, und ein, eine höhere Wärmeleitfähigkeit als das Polymermaterial aufweisendes, Füllmaterial.

Das Füllmaterial umfasst insbesondere ein Metalloxid oder Karbon. Das Füllmaterial kann als Partikel und/ oder als Fasern vorliegen.

Es wird weiter ein Verfahren zur Herstellung einer Batteriezelle, insbesondere zur Herstellung der beschriebenen Batteriezelle, vorgeschlagen. Das Verfahren umfasst zumindest die folgenden Schritte:
a) Bereitstellen mindestens eines Stapels aufeinander angeordneter Elektrodenfolien;
b) Bereitstellen mindestens eines Folienmaterials;
c) Anordnen des mindestens einen Folienmaterials an dem Stapel und Ausbilden eines gasdicht ausgeführten Zellengehäuses zumindest durch Verbinden eines ersten Endbereichs des mindestens einen Folienmaterials mit einem zweiten Endbereich des mindestens einen Folienmaterials, so dass das Zellengehäuse ein den Stapel umfassendes Gehäuseteil und an zumindest einer Seite der Batteriezelle einen, durch das Verbinden des ersten Endbereichs mit dem zweiten Endbereich gebildeten, von dem Gehäuseteil in einer radialen Richtung nach außen abstehenden Randbereich aufweist;
d) Anordnen eines Zusatzmaterials an dem Zellengehäuse und Umbiegen des Randbereichs hin zum Gehäuseteil, so dass zwischen dem Gehäuseteil und dem Randbereich ein, sich entlang einer Umfangsrichtung erstreckender, Kanal ausgebildet wird; wobei der Kanal in zumindest einem sich quer zur Umfangsrichtung erstreckenden Querschnitt des Kanals zu mindestens 50 % mit dem Zusatzmaterial gefüllt ist.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte kann variieren. Es können z. B. mehrere Stapel bereitgestellt werden, etc. Ebenso ist möglich, dass Verfahrensschritte einander zumindest teilweise zeitlich überlagern. Ganz besonders bevorzugt finden das Anordnen des Zusatzmaterials vor, während oder nach dem Umbiegen des Randbereichs statt. Insbesondere werden die Schritte a) bis d) in der angeführten Reihenfolge durchgeführt.

Insbesondere wird zumindest der Randbereich vor oder während Schritt d) auf mindestens 35 Grad Celsius, insbesondere auf mindestens 45 Grad Celsius, bevorzugt auf mindestens 55 Grad Celsius, erwärmt. Eine Erwärmung auf mehr als 80 Grad Celsius wird insbesondere vermieden. Insbesondere kann so eine Aushärtung des Zusatzmaterials beschleunigt werden.

Insbesondere wird ein durch das Zusatzmaterial kontaktierter Bereich des Zellengehäuses, insbesondere des Gehäuseteils und/ oder des Randbereichs, vor Schritt d) oberflächenbehandelt, um eine Haftung des Zusatzmaterials zu verbessern.

Insbesondere kann die Oberflächenbehandlung eine (chemische) Aktivierung und/ oder eine Plasmareinigung umfassen. Insbesondere kann eine mechanische Oberflächenbehandlung durchgeführt werden, z. B. durch die Einbringung einer Textur, also einer Oberflächenstrukturierung, z. B. in Form einer Erhöhung einer Rauigkeit und/ oder in Form von Vertiefungen und/ oder Erhöhungen. Die Oberflächenbehandlung kann insbesondere bereits bei der Herstellung des Zellengehäuses, z. B. bei einem Umformen bzw. Tiefziehen des Folienmaterials, durchgeführt werden.

Insbesondere erfolgt in Schritt d) zunächst ein Vorformen des Randbereichs, dann eine Applikation des Zusatzmaterials und abschließend ein Endformen des Randbereichs. Im Rahmen des Vorformens erfolgt z. B. zunächst ein Umbiegen des Randbereichs um einen ersten Winkelbetrag (ausgehend von dem nach Schritt c) im Wesentlichen orthogonal zur Seite angeordneten und sich dabei entlang der radialen Richtung erstreckenden Randbereichs).

Der erste Winkelbetrag beträgt z. B. mindestens 60 Winkelgrad, bevorzugt mindestens 80 Winkelgrad, besonders bevorzugt mindestens 90 Winkelgrad) gegenüber der nach Schritt c) vorliegenden Erstreckung des Randbereichs.

Infolge des Vorformens wird der Kanal zumindest so vorgeformt, dass eine Applikation des Zusatzmaterials erleichtert wird. Insbesondere wird so das Zusatzmaterial durch die zumindest teilweise umgebogene Form des Randbereichs von einem Austreten des Zusatzmaterials aus dem Kanal gehindert. Gleichzeitig bleibt der vorgeformte Kanal zur Applikation des Zusatzmaterials zugänglich, da der Kanal zwischen Randbereich und Seite bzw. Gehäuseteil eine zur Umgebung offene und sich entlang der Umfangsrichtung erstreckende Öffnung aufweist.

Insbesondere erfolgt nach der Applikation des Zusatzmaterials ein Endformen des Randbereichs, wobei der um den ersten Winkelbetrag umgebogenen Randbereich nun um einen zweiten Winkelbetrag weiter hin zum Gehäuseteil umgebogen wird. Eine Summe der Winkelbeträge ist größer als der erste Winkelbetrag. Der erste Winkelbetrag und der zweite Winkelbetrag ergeben in Summe insbesondere mindestens 90 Winkelgrad, bevorzugt mindestens 110 Winkelgrad, besonders bevorzugt mindestens 120 Winkelgrad. Insbesondere wird der Randbereich im Rahmen des Endformens so weit umgebogen, dass er den Gehäuseteil erneut kontaktiert. Infolge der Kontaktierung mit dem Gehäuseteil (und insbesondere bei dabei erfolgender zumindest teilweiser Aushärtung des Zusatzmaterials) kann der Kanal zumindest in einem Querschnitt, bevorzugt entlang der Erstreckung des Kanals entlang der Umfangsrichtung in allen Querschnitten, geschlossen ausgeführt sein.

Insbesondere kann die Batteriezelle, umfassend das mindestens eine Folienmaterial und den mindestens einen Stapel, im Rahmen von Schritt c) in einer Vorrichtung angeordnet werden. Die Vorrichtung umfasst z. B. eine untere Matrize zur Aufnahme des Folienmaterials und des Stapels. Durch Zusammenführen der unteren Matrize mit einer oberen Matrize kann das Zellengehäuse ausgeformt und der Randbereich ausgebildet werden.

Insbesondere kann an der mindestens einen Seite der Batteriezelle die eine Matrize (also die untere oder die obere, bevorzugt die untere Matrize) teilweise schwenkbar ausgeführt sein, so dass durch die Matrize das Vorformen des Randbereichs, also das Umbiegen des Randbereichs um den ersten Winkelbetrag, erfolgen kann. Dabei kontaktiert die schwenkbare Matrize den Randbereich so, dass der Randbereich hin zur anderen Matrize umgebogen wird.

Die andere (Vorform-) Matrize kann danach (also nach dem Vorformen und insbesondere vor Applikation des Zusatzmaterials) insbesondere gegen eine Endformmatrize getauscht werden, wobei durch die Vorrichtung der Randbereich weiter hin zum Gehäuseteil umgebogen wird. Insbesondere kann das Endformen, also das weitere Umbiegen des Randbereichs um den zweiten Winkelbetrag, ebenfalls durch den bzw. einen (anderen) schwenkbaren Abschnitt einer Matrize, bevorzugt der unteren Matrize, erfolgen.

Insbesondere erfolgt ein Erwärmen zumindest des Randbereichs (ausschließlich) beim Vorformen, (ausschließlich oder zusätzlich bei der Applikation des Zusatzmaterials), (ausschließlich oder zusätzlich) beim Endformen oder (ausschließlich oder zusätzlich) nach dem Endformen. Insbesondere erfolgt eine Aushärtung des Zusatzmaterials noch während die Batteriezelle in der Vorrichtung angeordnet und durch die Matrizen fixiert ist, also unter Vorspannung.

Bevorzugt wird das Zusatzmaterial nach dem Endformen und während der Randbereich unter Vorspannung in der um den zweiten Winkelbetrag umgebogenen Stellung gehalten wird, ausgehärtet.

Es wird weiter eine Batteriezellenanordnung vorgeschlagen, zumindest umfassend die beschriebene Batteriezelle oder die durch das beschriebene Verfahren hergestellte Batteriezelle sowie eine Kühloberfläche, wobei die Batteriezelle über den Randbereich an der Kühloberfläche angeordnet bzw. wärmeleitend in Kontakt ist. Insbesondere umfasst die Batteriezellenanordnung eine Mehrzahl von Batteriezellen.

Die Kühloberfläche ist insbesondere ein Festkörper, der bevorzugt auf einer von der Kühloberfläche abgewandten Seite von einem Kühlfluid, z. B. einer Flüssigkeit oder einem Gas, beaufschlagt oder durchströmt wird.

Insbesondere wird im Betrieb der Batteriezelle Wärme aus der Batteriezelle über die Kühloberfläche an eine Umgebung abgeführt. Selbstverständlich ist eine Temperierung der Batteriezelle über die Kühloberfläche auch möglich, d. h. auch eine zumindest zeitweise erfolgende Erwärmung der Batteriezelle, d. h. eine Wärmeleitung von der Kühloberfläche hin zu der Batteriezelle.

Die Ausführungen zu der Batteriezelle gelten insbesondere gleichermaßen für das Verfahren und die Batteriezellenanordnung und umgekehrt.

Insbesondere wird die Batteriezellenanordnung in einem Kraftfahrzeug eingesetzt bzw. verwendet, insbesondere zur Bereitstellung elektrischer Energie für einen Traktionsantrieb.

Die Verwendung unbestimmter Artikel ("ein", "eine", "einer" und "eines"), insbesondere in den

Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Teilbereich einer bekannten Batteriezelle in einer perspektivischen Ansicht;
- Fig. 2:: eine Batteriezellenanordnung und einen Teilbereich einer ersten Ausführungsvariante einer Batteriezelle in einer Seitenansicht;
- Fig. 3:: einen Teilbereich einer zweiten Ausführungsvariante einer Batteriezelle in einer perspektivischen Ansicht;
- Fig. 4:: die Batteriezelle nach Fig. 2 in einer perspektivischen Ansicht;
- Fig. 5:: eine Vorrichtung zur Herstellung der Batteriezelle während eines Vorformens des Randbereichs in einer Seitenansicht im Schnitt;
- Fig. 6:: die Vorrichtung nach Fig. 5 während des Endformens des Randbereichs in einer Seitenansicht im Schnitt;
- Fig. 7:: die Vorrichtung nach Fig. 6 in einer perspektivischen Ansicht; und
- Fig. 8:: die Vorrichtung nach Fig. 6 und 7 während des Aushärtens des Zusatzmaterials, in einer Seitenansicht im Schnitt.

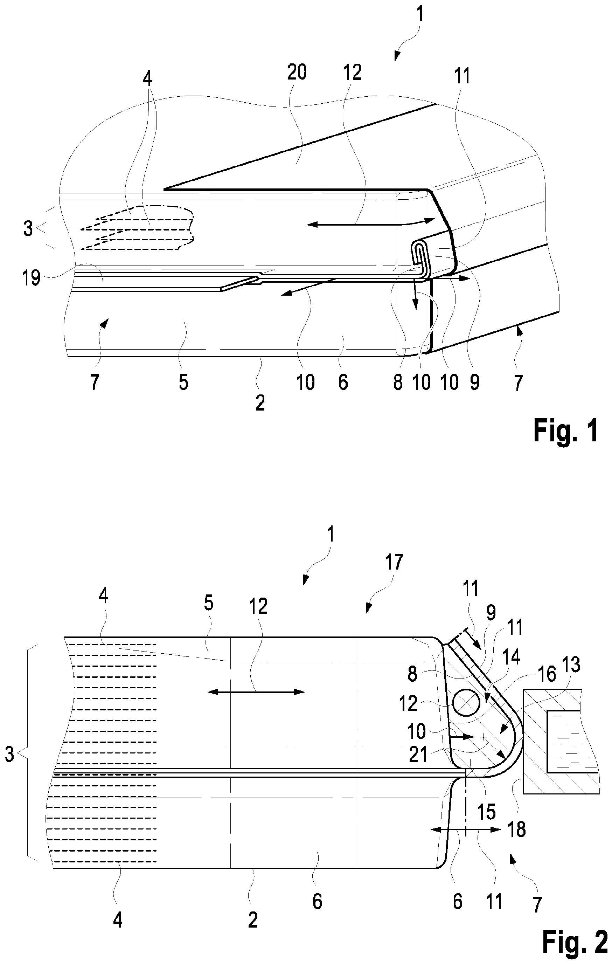

Die Fig. 1 zeigt einen Teilbereich einer bekannten Batteriezelle 1 in einer perspektivischen Ansicht. Die Batteriezelle 1 umfasst ein gasdicht ausgeführtes Zellengehäuse 2 und darin angeordnet einen Stapel 3 aufeinander angeordneter Elektrodenfolien 4. Das Zellengehäuse 2 ist durch ein Folienmaterial 5 gebildet. Das Zellengehäuse 2 weist einen den Stapel 3 umfassenden Gehäuseteil 6 und an zumindest einer Seite 7 der Batteriezelle 1 einen, durch das Verbinden eines ersten Endbereichs 8 des Folienmaterials 5 mit einem zweiten Endbereich 9 des Folienmaterials 5 gebildeten, von dem Gehäuseteil 6 in einer radialen Richtung 10 nach außen abstehenden Randbereich 11 auf.

Die Batteriezelle 1 ist als sogenannte Pouchzelle ausgeführt. In dem Randbereich 11 sind die aufeinanderliegenden Folienmaterialien 5 miteinander gasdicht über eine Siegelnaht verbunden. An der benachbart zu der den Randbereich 11 aufweisenden Seite 7 angeordneten anderen Seite 7 erstreckt sich ein Ableiter 19 aus dem Zellengehäuse 2.

An der Seite 7 mit dem abstehenden Randbereich 11 ist ein Klebeband 20 vorgesehen, durch das der Randbereich 11 an dem Gehäuseteil 6 durch Umbiegen bzw. Falzen oder Falten fixiert ist. Das Klebeband erstreckt sich ausgehend von der Seite 7 über den Randbereich 11 hin zu einer benachbart angeordneten Seite 7 des Zellengehäuses 2.

Fig. 2 zeigt eine Batteriezellenanordnung 17 und einen Teilbereich einer ersten Ausführungsvariante einer Batteriezelle 1 in einer Seitenansicht. Auf die Ausführungen zu Fig. 1 wird verwiesen.

Die Batteriezellenanordnung 17 umfasst eine Batteriezelle 1 sowie eine Kühloberfläche 18, wobei die Batteriezelle 17 über den Randbereich 11 an der Kühloberfläche 18 angeordnet ist.

Die Kühloberfläche 18 ist ein Festkörper, der auf einer von der Kühloberfläche 18 abgewandten Seite von einem Kühlfluid, z. B. einer Flüssigkeit oder einem Gas, beaufschlagt oder durchströmt wird.

Die Batteriezelle 1 weist ein gasdicht ausgeführtes Zellengehäuse 2 und darin angeordnet einen Stapel 3 aufeinander angeordneter Elektrodenfolien 4 auf. Das Zellengehäuse 2 ist durch ein Folienmaterial 5 gebildet. Das Zellengehäuse 2 weist einen den Stapel 3 umfassenden Gehäuseteil 6 und an einer Seite 7 der Batteriezelle 1 einen, durch das Verbinden eines ersten Endbereichs 8 des Folienmaterials 5 mit einem zweiten Endbereich 9 des Folienmaterials 5 gebildeten, von dem Gehäuseteil 6 in einer radialen Richtung 10 nach außen abstehenden Randbereich 11 auf. Der Randbereich ist hin zum Gehäuseteil 6 umgebogen angeordnet und bildet zwischen Gehäuseteil 6 und Randbereich 11 einen sich entlang einer Umfangsrichtung 12 erstreckenden Kanal 13 aus. Der Kanal 13 ist in einem sich quer zur Umfangsrichtung 12 erstreckenden Querschnitt 14 des Kanals 13 vollständig mit einem Zusatzmaterial 15 gefüllt.

Die Batteriezelle 1 ist eine Pouchzelle und unterscheidet sich von bekannten Pouchzellen durch die Anordnung des Randbereichs 11 und die Anordnung von Zusatzmaterial 15.

Der Randbereich 11 ist durch die aufeinanderliegenden Bereiche der Folienmaterialien 5 (z. B. Endbereiche 8, 9 eines einzigen Folienmaterials 5 oder Endbereiche 8, 9 von unterschiedlichen Folienmaterialien 5) gebildet. Der Randbereich 11 bildet eine gasdichte Verbindung der Folienmaterialien 5 aus. Der Randbereich 11 weist eine Siegelnaht zur Verbindung der Folienmaterialien 5 miteinander auf.

Der Randbereich 11 ist hin zum Gehäuseteil 6 umgebogen angeordnet und bildet so einen, sich entlang einer Umfangsrichtung 12 um das Gehäuseteil 6 erstreckenden, Kanal 13 zwischen Gehäuseteil 6 und Randbereich 11 aus. Der Randbereich 11 ist nicht soweit umgebogen, dass er das Gehäuseteil 6 wieder kontaktiert, so dass der Kanal 13 in dem Querschnitt 14 nach außen offen ist. Der Kanal 13 ist durch eine gedachte kürzeste Verbindung zwischen dem Randbereich 11 und dem Gehäuseteil 6 wie dargestellt begrenzt.

Der so definierte Kanal 13 weist in dem Querschnitt 14 eine Querschnittsfläche auf, die vollständig durch das Zusatzmaterial 15 gefüllt ist.

Entlang der Erstreckung des Kanals 13 ist keine Durchführung eines Ableiters 19 vorgesehen.

Mit dem in den Kanal 13 eingebrachtem Zusatzmaterial 15 kann ein spannungsarmes Falzen bzw. Umbiegen der im Randbereich 11 angeordneten Siegelnaht gewährleistet werden. Das in dem Kanal 13 angeordnete Zusatzmaterial 15 kann den Randbereich 11 an dem Gehäuseteil 6 abstützen, so dass zu geringe Radien entlang des Verlaufs des Randbereichs 11 entlang der radialen Richtung 10 vermieden werden. Damit kann so ein Falzen bzw. Knicken des Randbereichs 11 verhindert werden. Es wird also verhindert, dass der Randbereich 11 in seiner Erstreckung entlang der radialen Richtung 10 einen zu kleinen Biegeradius 21 aufweist.

Das Zusatzmaterial 15 ermöglicht eine Verbesserung der Wärmeleitung von der Batteriezelle 1 über das Gehäuseteil 6 hin zu der den Randbereich 11 kontaktierenden Kühloberfläche 18.

Gemäß Schritt a) des Verfahrens zur Herstellung einer Batteriezelle 1 erfolgt ein Bereitstellen eines Stapels 3 aufeinander angeordneter Elektrodenfolien 4. Gemäß Schritt b) erfolgt ein Bereitstellen mindestens eines Folienmaterials 5. Gemäß Schritt c) erfolgt ein Anordnen des mindestens einen Folienmaterials 5 an dem Stapel 3 und Ausbilden eines gasdicht ausgeführten Zellengehäuses 2 zumindest durch Verbinden eines ersten Endbereichs 8 des mindestens einen Folienmaterials 5 mit einem zweiten Endbereich 9 des mindestens einen Folienmaterials 5, so dass das Zellengehäuse 2 einen den Stapel 3 umfassenden Gehäuseteil 6 und an zumindest einer Seite 7 der Batteriezelle 1 einen, durch das Verbinden des ersten Endbereichs 8 mit dem zweiten Endbereich 9 gebildeten, von dem Gehäuseteil 6 in einer radialen Richtung 10 nach außen abstehenden Randbereich 11 aufweist. Gemäß Schritt d) erfolgt ein Anordnen eines Zusatzmaterials 15 an dem Zellengehäuse 2 und ein Umbiegen des Randbereichs 11 hin zum Gehäuseteil 6, so dass zwischen dem Gehäuseteil 6 und dem Randbereich 11 ein, sich entlang einer Umfangsrichtung 12 erstreckender, Kanal 13 ausgebildet wird. Der Kanal 13 ist in einem sich quer zur Umfangsrichtung 12 erstreckenden Querschnitt 14 des Kanals 13 vollständig mit dem Zusatzmaterial 15 gefüllt. Fig. 2 zeigt den Zustand der Batteriezelle 1 nach Schritt d). Ein durch das Zusatzmaterial 15 kontaktierter Bereich 16 des Zellengehäuses 2, also des Gehäuseteils 6 und/ oder des Randbereichs 11, wird vor Schritt d) oberflächenbehandelt, um eine Haftung des Zusatzmaterials 15 zu verbessern.

Der umgebogene Randbereich 11 ist an der Seite 7 der Batteriezelle 1 bzw. des Zellengehäuses 2 ausgebildet und erstreckt sich erkennbar nur bis zum oberen Rand dieser Seite 7 aber nicht über diese Seite 7 hinaus zu einer anderen Seite 7 des Zellengehäuses 2 (wie z. B. das Klebeband 20 bei der bekannten Batteriezelle 1 gemäß Fig. 1). Der Randbereich 11 ist also nur an der einen Seite 7 des Zellengehäuses 2 angeordnet.

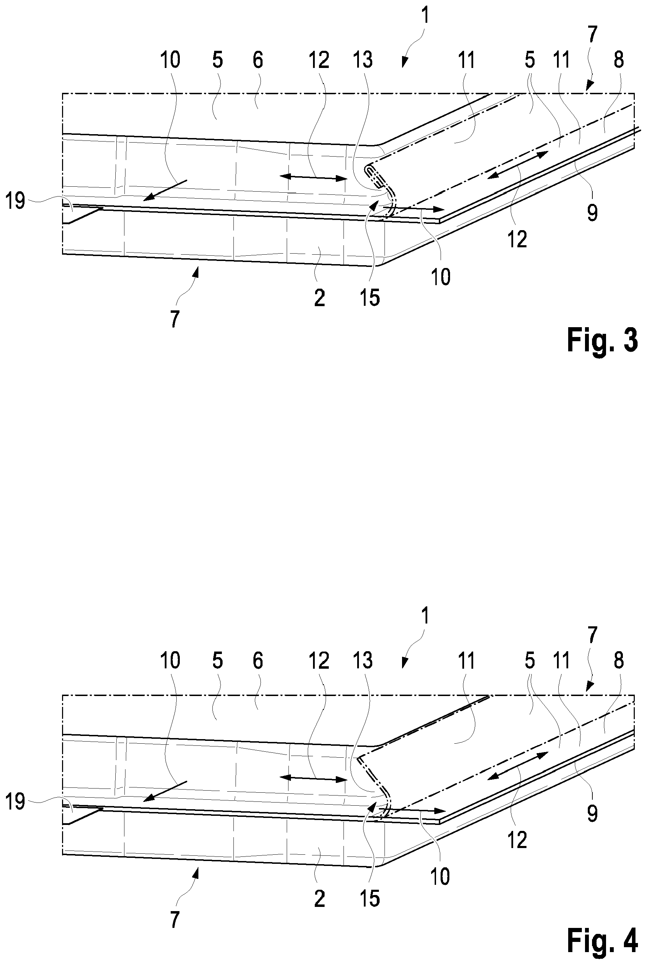

Fig. 3 zeigt einen Teilbereich einer zweiten Ausführungsvariante einer Batteriezelle 1 in einer perspektivischen Ansicht. Auf die Ausführungen zu Fig. 2 wird verwiesen.

Der Randbereich 11 ist vor und nach dem Umbiegen dargestellt. An der benachbart zu der den Randbereich 11 aufweisenden Seite 7 angeordneten anderen Seite 7 erstreckt sich ein Ableiter 19 aus dem Zellengehäuse 2. Der Randbereich 11 weist eine Falzung des Folienmaterials 5 auf. Der durch das Umbiegen erzeugte und durch das Zusatzmaterial 15 abgestützte Biegeradius 21 ist entlang der Erstreckung des Randbereichs entlang der radialen Richtung 10 zwischen der Falzung und dem Gehäuseteil 6 angeordnet.

Fig. 4 zeigt die Batteriezelle 1 nach Fig. 2 in einer perspektivischen Ansicht. Auf die Ausführungen zu Fig. 2 wird verwiesen.

Der Randbereich 11 ist vor und nach dem Umbiegen dargestellt. An der benachbart zu der den Randbereich 11 aufweisenden Seite 7 angeordneten anderen Seite 7 erstreckt sich ein Ableiter 19 aus dem Zellengehäuse 2.

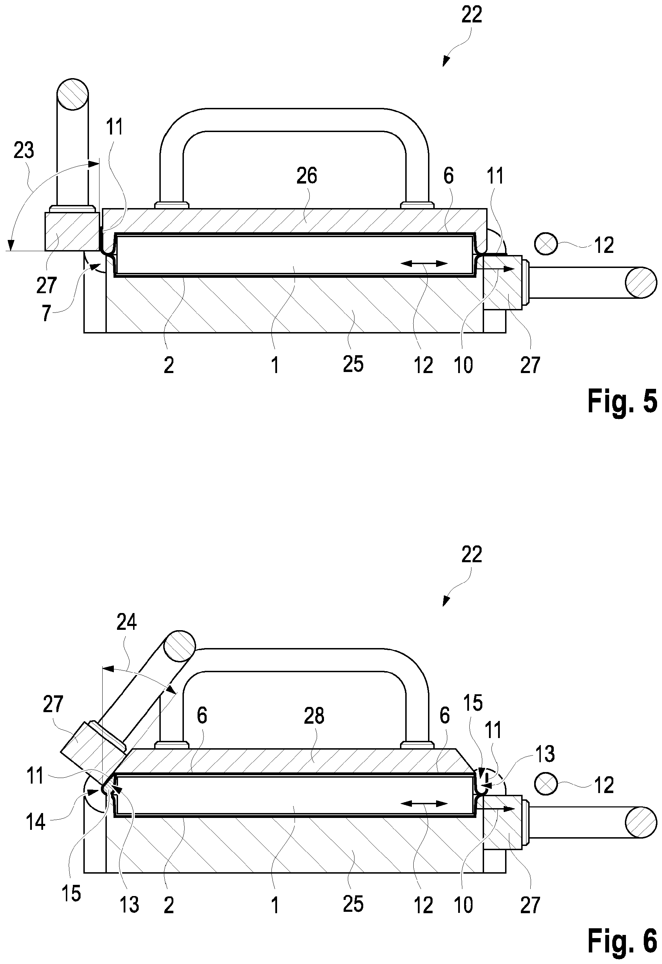

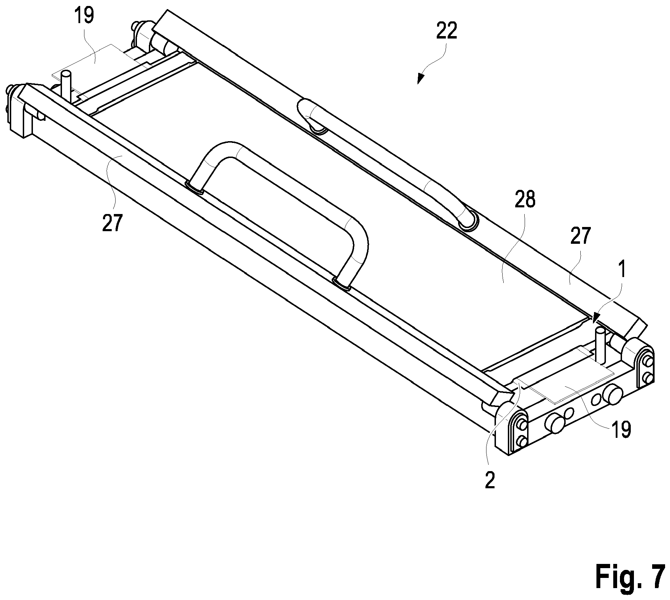

Fig. 5 zeigt eine Vorrichtung 22 zur Herstellung der Batteriezelle 1 während eines Vorformens des Randbereichs 11 in einer Seitenansicht im Schnitt. Fig. 6 zeigt die Vorrichtung 22 nach Fig. 5 während des Endformens des Randbereichs 11 in einer Seitenansicht im Schnitt. Fig. 7 zeigt die Vorrichtung 22 nach Fig. 6 in einer perspektivischen Ansicht. Die Fig. 5 bis 7 werden im Folgenden gemeinsam beschrieben. Auf die Ausführungen zu Fig. 2 bis 4 wird Bezug genommen.

In Schritt d) des Verfahrens erfolgt zunächst ein Vorformen des Randbereichs 11 (linke Seite der Vorrichtung 22), dann eine Applikation des Zusatzmaterials 15 (siehe Fig. 6 auf der rechten Seite der Vorrichtung 22) und abschließend ein Endformen des Randbereichs 11 (siehe Fig. 6 auf der linken Seite der Vorrichtung 22).

Im Rahmen des Vorformens (siehe Seite 7 auf der linken Seite der Vorrichtung 22 in Fig. 5) erfolgt zunächst ein Umbiegen des Randbereichs 11 um einen ersten Winkelbetrag 23 (ausgehend von dem nach Schritt c) im Wesentlichen orthogonal zur Seite 7 angeordneten und sich dabei entlang der radialen Richtung 10 erstreckenden Randbereichs 11, siehe Fig. 5 auf der rechten Seite der Vorrichtung 22). Der erste Winkelbetrag 23 beträgt ca. 90 Winkelgrad gegenüber der nach Schritt c) vorliegenden Erstreckung des Randbereichs 11.

Infolge des Vorformens wird der Kanal 13 zumindest so vorgeformt, dass eine Applikation des Zusatzmaterials 15 erleichtert wird. Das Zusatzmaterial 15 wird durch die zumindest teilweise umgebogene Form des Randbereichs 11 von einem Austreten des Zusatzmaterials 15 aus dem Kanal 13 gehindert. Weiter wird ein Austritt des Zusatzmaterials 15 aus den Enden des Kanals 13 durch die Vorrichtung 22 verhindert. Gleichzeitig bleibt der vorgeformte Kanal 13 zur Applikation des Zusatzmaterials 15 zugänglich, da der Kanal 13 zwischen Randbereich 11 und Seite 7 bzw. Gehäuseteil 6 eine zur Umgebung offene und sich entlang der Umfangsrichtung 12 erstreckende Öffnung aufweist (siehe Fig. 6 auf der rechten Seite der Vorrichtung 22).

Nach der Applikation des Zusatzmaterials 15 erfolgt ein Endformen des Randbereichs 11 (siehe Seite 7 auf der linken Seite der Vorrichtung 22), wobei der um den ersten Winkelbetrag 23 umgebogenen Randbereich 11 nun um einen zweiten Winkelbetrag 24 weiter hin zum Gehäuseteil 6 umgebogen wird. Der erste Winkelbetrag 23 und der zweite Winkelbetrag 24 ergeben in Summe ca. 120 Winkelgrad. Der Randbereich 11 wird im Rahmen des Endformens so weit umgebogen, dass er den Gehäuseteil 6 erneut kontaktiert. Infolge der Kontaktierung mit dem Gehäuseteil 6 (und insbesondere bei dabei erfolgender zumindest teilweiser Aushärtung des Zusatzmaterials 15) kann der Kanal 13 entlang der Erstreckung des Kanals 13 entlang der Umfangsrichtung 12 in allen Querschnitten 14, geschlossen ausgeführt werden.

Für die Durchführung des Verfahrens wird die Batteriezelle 1, umfassend das Folienmaterial 5 und den Stapel 3, im Rahmen von Schritt c) in einer Vorrichtung 22 angeordnet. Die Vorrichtung 22 umfasst eine untere Matrize 25 zur Aufnahme des Folienmaterials 5 und des Stapels 3. Durch Zusammenführen der unteren Matrize 25 mit einer oberen Matrize 26 kann das Zellengehäuse 2 ausgeformt und der Randbereich 11 ausgebildet werden.

An den Seiten 7 der Batteriezelle 1 ist die untere Matrize 25 teilweise schwenkbar ausgeführt, so dass durch die untere Matrize 25 bzw. deren schwenkbaren Abschnitt 27, das Vorformen des Randbereichs 11, also das Umbiegen des Randbereichs 11 um den ersten Winkelbetrag 23, erfolgen kann. Dabei kontaktiert der schwenkbare Abschnitt 27 den Randbereich 11 so, dass der Randbereich 11 hin zur oberen Matrize 26 umgebogen wird.

Die obere (Vorform-) Matrize 26 (siehe Fig. 5) wird danach (also nach dem Vorformen und insbesondere vor Applikation des Zusatzmaterials 15) gegen eine Endformmatrize 28 (siehe Fig. 6 und 7) getauscht, wobei die Endformmatrize 28 sich nicht entlang der Seite 7 der Batteriezelle 1 erstreckt. Die untere Matrize mit dem schwenkbaren Abschnitt 27 kann nun den Randbereich 11 um den zusätzlichen zweiten Winkelbetrag 24 weiter hin zum Gehäuseteil 6 umbiegen (siehe Fig. 6 auf der linken Seite der Vorrichtung 22; siehe auch Fig. 7).

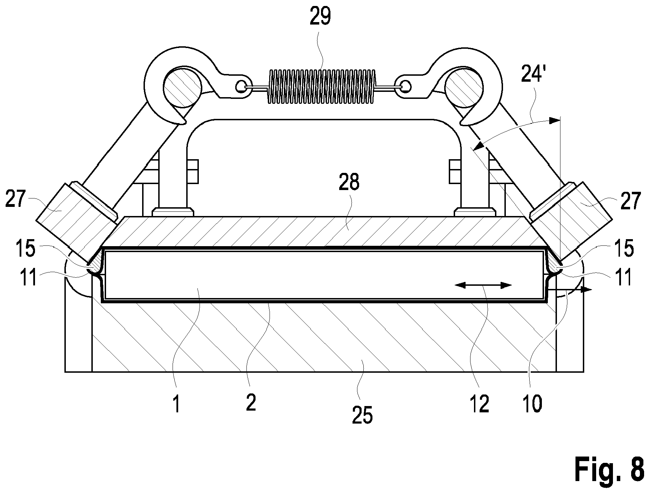

Fig. 8 zeigt die Vorrichtung 22 nach Fig. 6 und 7 während des Aushärtens des Zusatzmaterials 15, in einer Seitenansicht im Schnitt. Auf die Ausführungen zu den Figuren 5 bis 7 wird verwiesen.

Die obere (Vorform-) Matrize 25 wird nach dem Vorformen und vor der Applikation des Zusatzmaterials 15 gegen eine Endformmatrize 28 getauscht, wobei durch die Vorrichtung 22 bzw. durch den schwenkbaren Abschnitt 27 der unteren Matrize 25 der Randbereich 11 weiter hin zum Gehäuseteil 6 umgebogen wurde.

Nach dem Umformen des Randbereichs 11 um den zweiten Winkelbetrag 24 erfolgt ein Erwärmen zumindest des Randbereichs 11. Die Aushärtung des Zusatzmaterials 15 erfolgt noch während die Batteriezelle 1 in der Vorrichtung 22 angeordnet und durch die Matrizen 25, 28 fixiert ist, also unter Vorspannung. Die Vorspannung kann, wie in Fig. 8 dargestellt, über eine die schwenkbaren Abschnitte 27 verbindende Zugfeder 29 erzeugt werden.

### Bezugszeichenliste

- 1: Batteriezelle
- 2: Zellengehäuse
- 3: Stapel
- 4: Elektrodenfolie
- 5: Folienmaterial
- 6: Gehäuseteil
- 7: Seite
- 8: erster Endbereich
- 9: zweiter Endbereich
- 10: radiale Richtung
- 11: Randbereich
- 12: Umfangsrichtung
- 13: Kanal
- 14: Querschnitt
- 15: Zusatzmaterial
- 16: Bereich
- 17: Batteriezellenanordnung
- 18: Kühloberfläche
- 19: Ableiter
- 20: Klebeband
- 21: Biegeradius
- 22: Vorrichtung
- 23: erster Winkelbetrag
- 24: zweiter Winkelbetrag
- 25: untere Matrize
- 26: obere Matrize
- 27: Abschnitt
- 28: Endformmatrize
- 29: Zugfeder

## Patentansprüche

1. Batteriezelle (1), zumindest aufweisend ein gasdicht ausgeführtes Zellengehäuse (2) und darin angeordnet mindestens einen Stapel (3) aufeinander angeordneter Elektrodenfolien (4); wobei das Zellengehäuse (2) durch ein Folienmaterial (5) gebildet ist, wobei das Zellengehäuse (2) ein den Stapel (3) umfassendes Gehäuseteil (6) und an zumindest einer Seite (7) der Batteriezelle (1) einen, durch das Verbinden eines ersten Endbereichs (8) des Folienmaterials (5) mit einem zweiten Endbereich (9) des Folienmaterials (5) gebildeten, von dem Gehäuseteil (6) in einer radialen Richtung (10) nach außen abstehenden Randbereich (11) aufweist; wobei der Randbereich (11) hin zum Gehäuseteil (6) umgebogen angeordnet ist und zwischen Gehäuseteil (6) und Randbereich (11) einen sich entlang einer Umfangsrichtung (12) erstreckenden Kanal (13) ausbildet; wobei der Kanal (13) in zumindest einem sich quer zur Umfangsrichtung (12) erstreckenden Querschnitt (14) des Kanals (13) zu mindestens zu 50 % mit einem Zusatzmaterial (15) gefüllt ist.

2. Batteriezelle (1) nach Patentanspruch 1, wobei das Zusatzmaterial (15) ein Klebstoff ist, durch den der Randbereich (11) mit dem Gehäuseteil (6) verbunden ist.

3. Batteriezelle (1) nach einem der vorhergehenden Patentansprüche, wobei das Zusatzmaterial (15) zumindest ein Polymermaterial und ein, eine höhere Wärmeleitfähigkeit als das Polymermaterial aufweisendes, Füllmaterial umfasst.

4. Batteriezelle (1) nach Patentanspruch 3, wobei das Füllmaterial eine Metalloxid oder Karbon umfasst.

5. Verfahren zur Herstellung einer Batteriezelle (1), zumindest umfassend die folgenden Schritte:
a) Bereitstellen mindestens eines Stapels (3) aufeinander angeordneter Elektrodenfolien (4);
b) Bereitstellen mindestens eines Folienmaterials (5);
c) Anordnen des mindestens einen Folienmaterials (5) an dem Stapel (3) und Ausbilden eines gasdicht ausgeführten Zellengehäuses (2) zumindest durch Verbinden eines ersten Endbereichs (8) des mindestens einen Folienmaterials (5) mit einem zweiten Endbereich (9) des mindestens einen Folienmaterials (5), so dass das Zellengehäuse (2) ein den Stapel (3) umfassendes Gehäuseteil (6) und an zumindest einer Seite (7) der Batteriezelle (1) einen, durch das Verbinden des ersten Endbereichs (8) mit dem zweiten Endbereich (9) gebildeten, von dem Gehäuseteil (6) in einer radialen Richtung (10) nach außen abstehenden Randbereich (11) aufweist;
d) Anordnen eines Zusatzmaterials (15) an dem Zellengehäuse (2) und Umbiegen des Randbereichs (11) hin zum Gehäuseteil (6), so dass zwischen dem Gehäuseteil (6) und dem Randbereich (11) ein sich entlang einer Umfangsrichtung (12) erstreckender Kanal (13) ausgebildet wird; wobei der Kanal (13) in zumindest einem sich quer zur Umfangsrichtung (12) erstreckenden Querschnitt (14) des Kanals (13) zu mindestens zu 50 % mit dem Zusatzmaterial (15) gefüllt ist.

6. Verfahren nach Patentanspruch 5, wobei zumindest der Randbereich (11) vor oder während Schritt d) auf mindestens 35 Grad Celsius erwärmt wird.

7. Verfahren nach einem der vorhergehenden Patentansprüche 5 und 6, wobei in Schritt d) zunächst ein Vorformen des Randbereichs (11), dann eine Applikation des Zusatzmaterials (15) und abschließend ein Endformen des Randbereichs (11) durchgeführt wird; wobei im Rahmen des Vorformens ein Umbiegen des Randbereichs (11) um einen ersten Winkelbetrag (23) und im Rahmen des Endformens ein weiteres Umbiegen des Randbiegens (11) um einen zweiten Winkelbetrag (24) erfolgt; wobei eine Summe der Winkelbeträge (23, 24) größer als der erste Winkelbetrag (23) ist.

8. Verfahren nach Patentanspruch 6, wobei das Zusatzmaterial (15) nach dem Endformen und während der Randbereich (11) unter Vorspannung in der um den zweiten Winkelbetrag (24) umgebogenen Stellung gehalten wird, ausgehärtet wird.

9. Verfahren nach einem der vorhergehenden Patentansprüche 5 bis 8, wobei ein durch das Zusatzmaterial (15) kontaktierter Bereich (16) des Zellengehäuses (2) vor Schritt d) oberflächenbehandelt wird, um eine Haftung des Zusatzmaterials (15) zu verbessern.

10. Batteriezellenanordnung (17), zumindest umfassend eine Batteriezelle (1) nach einem der vorhergehenden Patentansprüche 1 bis 4 oder eine durch das Verfahren nach einem der Patentansprüche 5 bis 9 hergestellte Batteriezelle (1) sowie eine Kühloberfläche (18), wobei die Batteriezelle (1) über den Randbereich (11) an der Kühloberfläche (18) angeordnet ist.
